# EUROPÄISCHE PATENTSCHRIFT

(11) **EP 0 918 945 B1**
(45) Veröffentlichungstag und Bekanntmachung des Hinweises auf die Patenterteilung: **08.03.2000**
(21) Anmeldenummer: 97923721.1
(22) Anmeldetag: 07.04.1997
(51) Int. Cl.: F16C 13/00, D21G 1/02

(54) **BEHEIZBARE WALZE**
HEATED ROLLER
CYLINDRE CHAUFFANT

(30) Priorität: 17.08.1996 DE 29614264 U
(43) Veröffentlichungstag der Anmeldung: 02.06.1999
(73) Patentinhaber: Eduard Küsters Maschinenfabrik GmbH & Co. KG, 47805 Krefeld (DE)
(72) Erfinder: KUBIK, Klaus, D-47918 Tönisvorst (DE)
(74) Vertreter: Palgen, Peter, Dipl.-Phys. Dr.
(86) Internationale Anmeldenummer: DE9700703
(87) Internationale Veröffentlichungsnummer: WO9807998

(56) Entgegenhaltungen:
- DE-A- 2 929 620
- DE-A- 4 033 986
- DE-A- 4 036 121
- DE-U- 9 016 548
- FR-A- 1 544 792
- US-A- 5 054 543
- US-A- 5 171 404

## Beschreibung

Die Erfindung bezieht sich auf eine beheizbare Walze der dem Oberbegriff des Anspruchs 1 entsprechenden Art.

Achsparallele Kanäle sind im Zusammenhang mit der Beheizung von Walzen seit langem bekannt, z.B. aus dem DE 90 14 117U, wo sie allerdings kein geschlossenes System bilden, sondern von einer Wärmeträgerflüssigkeit durchströmt werden, die außerhalb der Walze aufgeheizt und umgepumpt wird.

Bei der dem Oberbegriff zugrundeliegenden DE 40 33 986 A1 sind in einer zentralen Bohrung des Walzenkörpers keine und in den teilweise mit einer siedefähigen Konvektionsflüssigkeit gefüllten peripheren Kanälen stabförmige elektrische Heizelemente angeordnet.

Achsparallele längliche Kanäle sind mit bekannten Mitteln im Walzenkörper mit relativ geringem Aufwand herstellbar und belassen den Walzenkörper in seiner Stabilität im wesentlichen unversehrt. Der Ausdruck "länglicher Kanal" soll besagen, daß es auf den Querschnitt nicht ankommt und daß es sich um Kanäle von einer einem Vielfachen, z.B. 20-bis 150-fachen, der Querschnittsabmessung betragenden Länge handelt. In der Praxis handelt es sich um nahe dem äußeren Umfang des Walzenkörpers in diesen eingebrachte sogenannte periphere Bohrungen. Diese Bohrungen enthalten die Heizelemente, deren Anschlüsse an den Enden herauszuführen sind. Dies erfordert bei den hohen Drücken in den Bohrungen aufwendige Abdichtungen. Wegen der Nähe der Heizelemente zum Walzenumfang ist die Temperaturverteilung in Umfangsrichtung des Walzenumfangs häufig ungleichmäßig.

Der Erfindung liegt die Aufgabe zugrunde, eine gattungsgemäße Walze so auszugestalten, daß der Aufwand bei ihrer Herstellung verringert und ihre Eigenschaften im Betrieb verbessert sind.

Diese Aufgabe wird durch die in Anspruch 1 wiedergegebene Erfindung gelöst.

Die länglichen Kanäle sind bei der Erfindung einzeln bis zu einem gewissen Grad mit Wasser gefüllt und dann druckdicht verschlossen worden. Außerdem sind die Kanäle nach dem Befüllen mit Wasser evakuiert worden, da sich sonst in den Kanälen Luftpfropfen bilden, die das Kondensieren des Dampfes behindern. Tritt im Betrieb an einer Stelle einer Bohrung eine Temperaturerniedrigung ein, kondensiert dort der in dem vom Wasser nicht gefüllten freien Raum der Hohlkammer befindliche Dampf und bewirkt eine Kondensationsaufheizung, die die betreffende Stelle sogleich wieder auf die in der Umgebung vorliegende Temperatur bringt. Es ist also ein selbsttätiger Temperaturausgleich über die Oberfläche des Walzenkörpers gegeben.

Durch die Anordnung der Strahlungsheizung in der ersten inneren Hohlraumanordnung wird die Wärmeverteilung an dem Walzenumfang gleichmäßiger. Es entfällt auch der Dichtungsaufwand für die Herausleitung der elektrischen Anschlüsse an den Kanälen, weil diese keine Heizelemente mehr enthalten.

Die Kanäle sind zweckmäßig in der in Anspruch 2 wiedergegebenen Weise an den Enden geschlossen.

Alternativ können die Kanäle auch in der in Anspruch 3 wiedergegebenen Weise geschlossen werden.

Da die Schließringe und die Stopfen dicht sein und gegebenenfalls hohen Drücken standhalten können müssen, empfiehlt es sich, sie längs ihrer Fügezone, d.h. längs der beiden Längsränder der Schließringe und am Umfang der Stopfen zu verschweißen (Anspruch 4).

Bei dem bevorzugten Ausführungsbeispiel der Erfindung hat der zylindrische Walzenkörper angesetzte Walzenzapfen. Diese können gemäß Anspruch 5 so ausgestaltet sein, daß sie die Fügezonen abdecken, so daß auch im Falle des Berstens einer Schweißnaht die Schadensstelle unter Verschluß gehalten und das explosionsartige Wegfliegen von Teilen unter dem hohen Dampfdruck vermieden ist.

Die Ausführung des Walzenzapfens kann insbesondere in der in Anspruch 6 wiedergegebenen Weise getroffen sein.

Die Strahlungsheizung in dem ersten zur Achse koaxialen mittigen Hohlraum kann mit dem Walzenkörper umlaufen und über mindestens einen Drehanschluß mit Energie versorgbar sein (Anspruch 7), wie es für sich genommen für widerstandsbeheizte Strahlungsheizkörper aus dem Aufsatz von Wagner "Die elektrische Walzenheizung" in "Die elektrische Ausrüstung" (Vogel-Verlag Würzburg) Nr. 2 vom 20. April 1966 beschrieben ist.

Gemäß Anspruch 8 ist es aber auch möglich, daß die Strahlungsheizung undrehbar angeordnet ist, was den Drehanschluß erspart, und in dem koaxialen mittigen Hohlraum drehgelagert ist.

In der Zeichnung sind Ausführungsbeispiele der Erfindung schematisch dargestellt.
Fig. 1 zeigt einen durch die Achse gehenden Längsschnitt durch eine beheizte Walze;
Fig. 2 ist ein Teilquerschnitt nach der Linie II-II in Fig. 1;
Fig. 3 zeigt einen Teillängsschnitt durch einen Endbereich einer Walze;
Fig. 4 zeigt eine Ansicht nach der Linie IV-IV in Fig. 3;
Fig. 5 und 6 zeigen entsprechende Ansichten einer abgewandelten Ausführungsform.

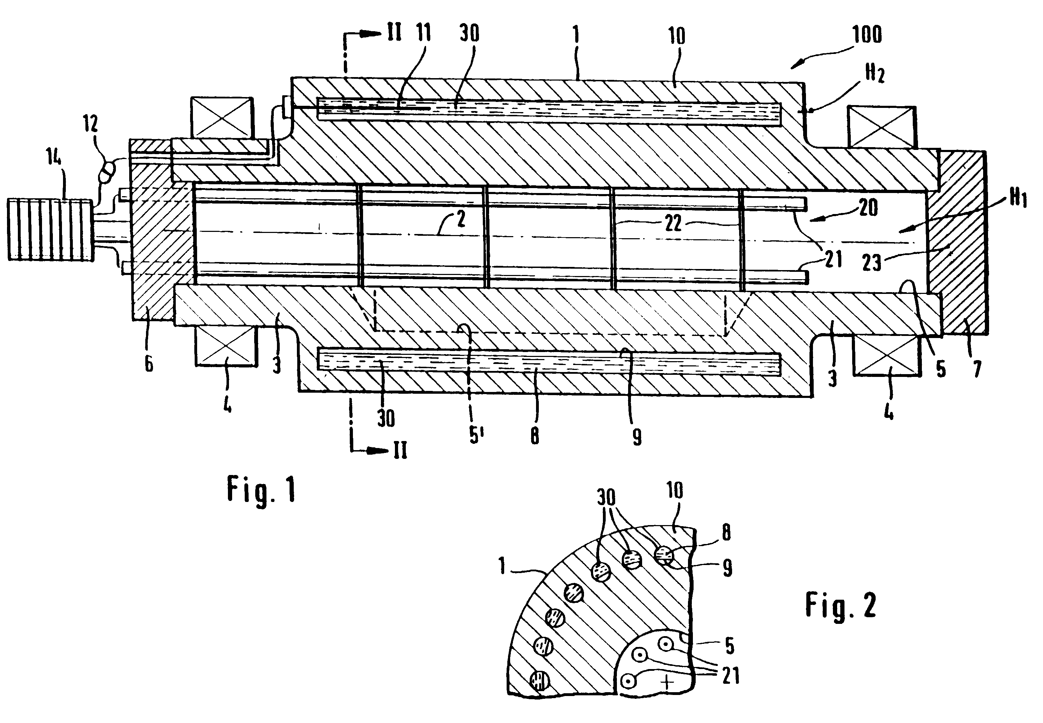

Die als Ganzes mit 100 bezeichnete Walze umfaßt einen dickwandigen zylindrischen Walzenkörper 10 aus Stahl mit einem arbeitenden Walzenumfang 1 und einer Achse 2, der an den beiden Enden auf einen geringeren Durchmesser abgesetzte nach außen vorstehende Walzenzapfen 3 besitzt, auf denen Lager 4 zur Lagerung der Walze 100 in einem Maschinengestell oder dergleichen angeordnet sind. Der Walzenkörper 10 enthält als erste Hohlraumanordnung H₁ einen einzelnen zur Achse 2 koaxialen zylindrischen inneren Hohlraum 5, in welchem eine als Ganzes mit 20 bezeichnete elektrische Heizvorrichtung in Gestalt einer Strahlungsheizung angeordnet ist, die in dem gezeigten Ausführungsbeispiel gegenüber dem Walzenkörper 10 undrehbar ist und mit diesem umläuft. Die Strahlungsheizung 20 umfaßt mehrere, z.B. sechs oder acht, auf einem Teilkreis über den Umfang gleichmäßig verteilte achsparallele elektrische Widerstandsheizstäbe 21, die mittels in in axialen Abständen angeordneter Haltescheiben 22 in ihrer gegenseitigen Anordnung abgestützt sind und an dem in der Zeichnung linken Ende eine Endscheibe 6 der Walze 100 durchsetzen, an deren Außenseite eine Schleifringanordnung 14 vorgesehen ist, durch die der Strom zur Beheizung der Heizstäbe 21 einleitbar ist. Wenn die Strahlungsheizung, was einer nicht dargestellten möglichen Ausführungsform entspricht, im Innern des Walzenkörpers undrehbar angeordnet ist und sich der Walzenkörper 10 um die Strahlungsheizung dreht, bedarf es der Schleifringanordnung 14 nicht und können feste Anschlüsse für die Heizenergie vorgesehen sein. Die Strahlungsheizung 20 bildet eine in sich geschlossene Baueinheit, die nach dem Lösen der Endscheibe 6 nach links aus der Walze 100 herausgezogen werden kann, z.B. falls einzelne Heizstäbe 21 defekt sind und ausgewechselt werden müssen. An dem in Fig. 1 rechten Ende ist der Hohlraum 5 durch eine vor die Stirnseite des dortigen Walzenzapfens 3 geschraubte Deckscheibe 7 geschlossen. Die Strahlungsheizung 20 ist ohne wesentliche konstruktive Anpassungen an dem Walzenkörper 10 und ohne Querschnittsschwächungen (der innere Hohlraum 5 ist herstellungsbedingt ohnehin vorhanden) in dem Walzenkörper unterbringbar und kann bei Schäden leicht als Ganzes herausgezogen und ausgewechselt werden. Außerdem sind im Vergleich zu einer Ölbeheizung die Fährnisse des Umgangs mit sehr heißem Öl nicht gegeben.

Die Strahlungsheizung 20 heizt durch Strahlung die Umfangsfläche des Hohlraums 5 auf. Die Wärme wird durch Leitung radial nach außen transportiert und am Außenumfang 1 der Walze 100 auf die zu bearbeitende Warenbahn übertragen. Angestrebt ist eine möglichst gleichmäßige Temperaturverteilung am Außenumfang 1, in erster Linie in Längsrichtung der Walze 100, aber auch in Umfangrichtung.

Die Gleichmäßigkeit der Temperaturverteilung kann gestört werden, wenn entweder die Heizstäbe 21 ungleichmäßig arbeiten oder die Warenbahn ungleichmäßige Wärmemengen abnimmt, beispielsweise durch ungleichmäßige Feuchtegehalte.

Um der Ungleichmäßigkeit der Temperaturverteilung entgegenzuwirken, ist in dem Walzenkörper 10 radial außerhalb des Hohlraums 5 eine zweite Hohlraumanordnung H₂ in Gestalt über den Umfang gleichmäßig verteilter, auf einem Teilkreis angeordneter, gleichen Durchmesser aufweisender achsparalleler Bohrungen 30 vorgesehen, die in dem Ausführungsbeispiel etwa um den Betrag ihres Durchmessers innerhalb des Außenumfangs 1 gelegen sind und auch in Umfangsrichtung einen entsprechenden lichten Abstand voneinander belassen. Die Bohrungen 30 sind je für sich an den Enden geschlossen und bilden voneinander getrennte Kanäle bzw. druckdichte Kammern.

Die Bohrungen 30 bilden geschlossene teilweise mit Wasser gefüllte Systeme, in welchen der Druck entsprechend der an den Stellen der Bohrungen 30 herrschenden Temperatur ansteigt. Im Betrieb, wenn also die Walze 100 mit erheblicher Geschwindigkeit umläuft, legt sich das Wasser 8 unter Wirkung der Zentrifugalkraft gegen die äußere Begrenzung der Bohrungen 30 und bildet einen zylindrischen inneren Spiegel 9. Sobald an einer Stelle der inneren, von dem Wasser freien Begrenzung der Bohrung 30 eine niedrigere Temperatur auftritt, kondensiert dort der Wasserdampf und zieht die Temperatur an der betreffenden Stelle wieder hoch. Das Wasser 8 in den teilweise gefüllten Bohrungen 30 wirkt also als selbsttätiger Temperaturausgleich.

Die Temperatur des Wassers 8 kann durch einen Thermofühler 11, der bei laufender Walze radial außerhalb des inneren Spiegels 9 des Wassers 8 und somit in dem Wasser gelegen ist, erfaßt werden, dessen Signal über eine Steckerverbindung 12 einem der Schleifringe der Schleifringanordnung 14 zugeleitet wird.

Die Funktion der Bohrungen 30 besteht also nur darin einen druckdichten, teilweise mit Wasser gefüllten Raum zu bilden und temperaturausgleichend zu wirken. In den Bohrungen 30 befinden sich keine Heizelemente. Diese finden sich nur in der inneren Hohlraumanordnung H₁ in Gestalt der Strahlungsheizung.

In der Zeichnung ist eine Modifikation gestrichelt angedeutet. Sie beinhaltet eine im Arbeitsbereich des Walzenumfangs 1 vorhandene zur Achse 2 koaxiale zylindrische Erweiterung 5' des zentralen Hohlraums 5, der in diesem Bereich die Wandstärke des Walzenkörpers 10 verringert, so daß die auf den Innenumfang des Walzenkörpers 10 aufgebrachte Wärme nunmehr eine geringere radiale Strecke durch Leitung transportiert werden muß.

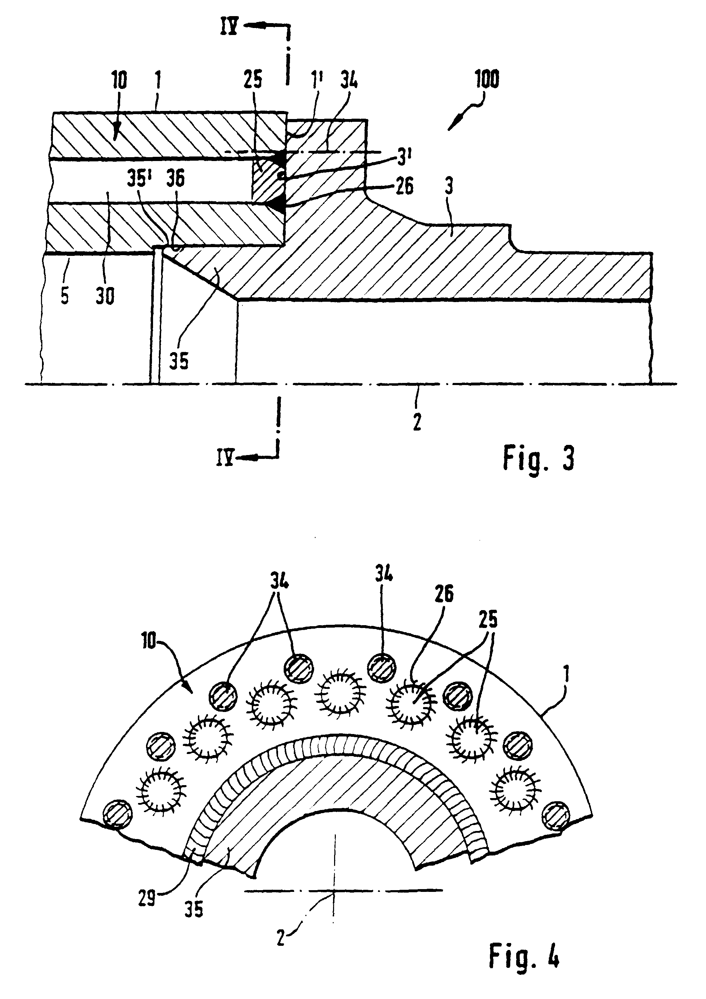

In Fig. 3 bis 6 sind Möglichkeiten der praktischen Realisierung des Verschlusses an den Enden der Längsbohrungen 30 wiedergegeben. Die Walzenzapfen 3 sind hierbei als separate Teile an den eigentlichen zylindrischen Walzenkörper 10 angesetzt.

In Fig. 3 ist ersichtlich, daß die die Kanäle in dem zylindrischen Walzenkörper 10 bildenden Längsbohrungen 30 von der jeweiligen zur Achse 2 senkrechten Stirnseite 1' des Walzenkörpers 10 ausgehen. Die Längsbohrungen 30 sind sämtlich durch eingeschweißte Stopfen 25 dicht verschlossen. Die Fügezone, d.h. die ringförmige Schweißnaht, trägt die Bezugszahl 26.

Der separate Walzenzapfen 3 ist mit einer zur Achse senkrechten Endfläche 3' gegen die Stirnseite 1' des Walzenkörpers 10 gesetzt und dort mittels über den Umfang verteilter in Fig. 3 nur angedeuteter achsparalleler Schrauben 34 befestigt. Der Walzenzapfen 3 besitzt einen axial vorspringenden Zentrierbund 35, der sich mit seiner Außenumfangsfläche 35' von innen gegen einen Innenumfangsteil 36 des Walzenkörpers 10 legt.

Der Walzenzapfen 3 deckt also die Fügezonen in Gestalt der Schweißnähte 26 gegen den in den Längsbohrungen 30 herrschenden, bei hohen Arbeitstemperaturen sehr hohen Druck nach außen ab, so daß bei einem Versagen einer der Schweißnähte keine Teile nach außen geschleudert werden können.

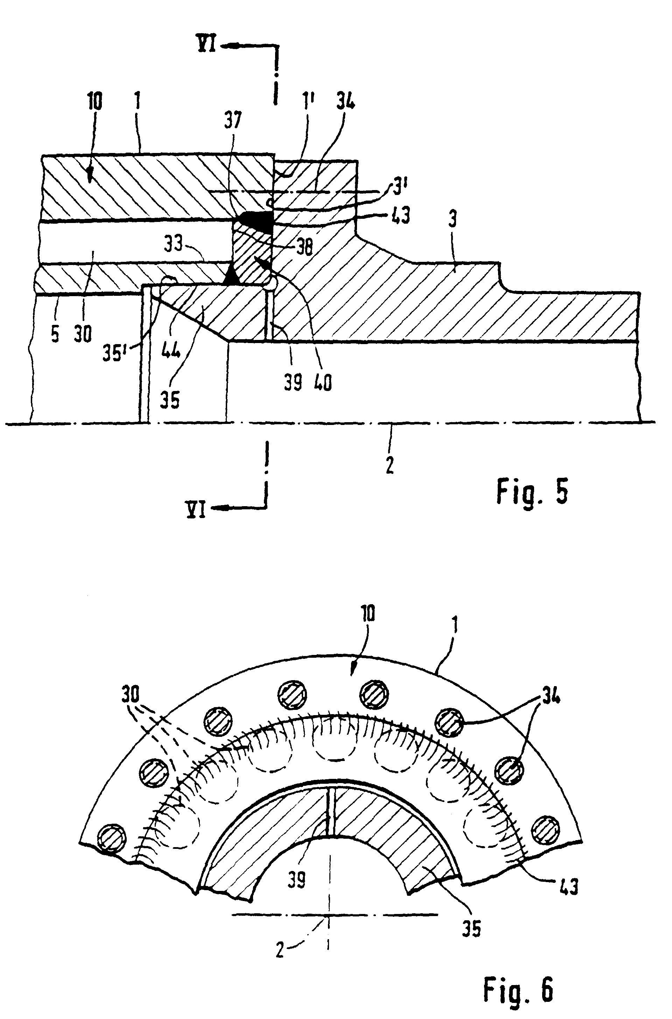

Bei der Ausführungsform nach den Fig. 5 und 6 ist in die Stirnseite 1' des Walzenkörpers 10 ein gestufter innerer Absatz mit einem zylindrischen äußeren Wandungsteil 37, einem senkrecht zur Achse 2 nach innen vorspringenden absatzartigen Wandungsteil 38 eingedreht. Die Längsbohrungen 30 werden in den absatzartigen Wandungsteil 38 eingebracht, der sich also über den gesamten Querschnitt der Längsbohrungen 30 erstreckt. Nach Fertigstellung der Längsbohrungen 30 wird ein Schließring 40 eingeschweißt, der in einem durch die Achse gehenden Querschnitt etwa rechteckig ist, den inneren Absatz ausfüllt und die Längsbohrungen 30 an dem jeweiligen Ende schließt. Der Schließring 40 ist an seinen beiden Rändern durch Schweißnähte 43, 44 mit dem äußeren Rand der Zylinderfläche 37 bzw. dem inneren Rand des Wandungsteils 38 verschweißt.

Die durch die Schweißnähte 43, 44 gebildete Fügezone wird in der gleichen Weise wie in dem Ausführungsbeispiel der Fig. 3 und 4 durch die zur Achse 2 senkrechte Endfläche 3' und den Außenumfang 35' des Zentrierbundes 35 abgedeckt. 39 ist eine Druckentlastungsbohrung, die vom Scheitel zwischen der Endfläche 3' und dem Außenumfang 35' des Zentrierbundes 35 in der aus der Zeichnung ersichtlichen Weise ausgeht.

## Patentansprüche

1. Beheizbare Walze (110) mit einem um seine Achse (2) umlaufenden zylindrischen Walzenkörper (10), dessen Außenumfang (1) den arbeitenden Walzenumfang bildet, der eine Heizvorrichtung enthält und der eine erste innere Hohlraumanordnung (H₁) sowie eine zweite Hohlraumanordnung (H₂) in Gestalt mehrerer voneinander getrennter über den Umfang des Walzenkörpers (10) gleichmäßig verteilter, länglicher, an den Enden geschlossener achsparalleler Kanäle (30) aufweist, die teilweise mit einer bei der durch die Heizvorrichtung erzeugten Temperatur verdampfenden Flüssigkeit gefüllt sind,
**dadurch gekennzeichnet,**
daß in der ersten Hohlraumanordnung (H₁) eine über die Länge der Walze (100) in deren Längsrichtung mindestens über die Arbeitsbreite der Walze (100) sich erstreckende elektrische Strahlungsheizung (20) angeordnet ist.

2. Walze nach Anspruch 1, **dadurch gekennzeichnet,** daß die Kanäle an den Enden des Walzenkörpers (10) durch eingesetzte Stopfen (25) axial nach außen geschlossen sind.

3. Walze nach Anspruch 1, **dadurch gekennzeichnet**, daß die Kanäle (30) an mindestens einem Ende des Walzenkörpers (10) durch einen gemeinsamen Schließring (40) axial nach außen geschlossen sind.

4. Walze nach Anspruch 2 oder 3, **dadurch gekennzeichnet,** daß der/die Schließring(e) (40) bzw. die Stopfen (25) längs ihrer Fügezonen verschweißt sind.

5. Walze nach einem der Ansprüche 2 bis 4, **dadurch gekennzeichnet**, daß an die Enden des zylindrischen Walzenkörpers (10) je ein Walzenzapfen (3) angesetzt ist, der die Fügezonen (26,28,29;43,44) abdeckt.

6. Walze nach Anspruch 5, **dadurch gekennzeichnet,** daß der Walzenzapfen (3) eine gegen die Stirnseite (1') des Walzenkörpers (10) zur Anlage kommende, zur Achse (2) senkrechte Endfläche (3') und einen in das Ende des zylindrischen Walzenkörpers (10) eingreifenden zylindrischen Zentrieransatz (35) umfaßt.

7. Walze nach einem der Ansprüche 1 bis 6, **dadurch gekennzeichnet**, daß die Heizeinrichtung (20) mit dem Walzenkörper (10) umläuft und über mindestens einen Drehanschluß (14) mit Energie versorgbar ist.

8. Walze nach einem der Ansprüche 1 bis 6, **dadurch gekennzeichnet**, daß die Heizeinrichtung undrehbar angeordnet und in dem Hohlraum (5) drehgelagert ist.

## Claims

1. A heatable roller (110) comprising a cylindrical roller body (1) which rotates about its axis (2) and the outer periphery (1) of which forms the working roller periphery, which contains a heating device and which comprises a first inner cavity arrangement (H₁) and a second cavity arrangement (H₂) in the form of a plurality of elongate axis-parallel ducts (30) which are separated from one another, are uniformly distributed over the periphery of the roller body (10), are closed at the ends, and are partially filled with a liquid which evaporates at the temperature produced by the heating device, characterised in that an electrical radiant heater (20) is disposed in the first cavity arrangement (H₁) and extends over the length of the roller (100) in the longitudinal direction thereof at least over the working width of the roller (100).

2. A roller according to claim 1, characterised in that the ducts at the ends of the roller body (10) are closed axially from the exterior by inserted plugs (25).

3. A roller according to claim 1, characterised in that the ducts (30) are closed axially from the exterior at least at one end of the roller body (10) by a common closure ring (40).

4. A roller according to claim 2 or 3, characterised in that the closure ring or rings (40) and the plugs (25) respectively are welded along their joint zones.

5. A roller according to any one of claims 2 to 4, characterised in that a roller journal (3) is fitted at each end of the cylindrical roller body (10) and covers the joint zones (26, 28, 29; 43, 44).

6. A roller according to claim 5, characterised in that the roller journal (3) comprises an end face (3') perpendicular to the axis (2) and abutting the end face (1') of the roller body (10), and a cylindrical centring shoulder (35) engaging in the end of the cylindrical roller body (10).

7. A roller according to any one of claims 1 to 6, characterised in that the heating device (20) rotates with the roller body (10) and can be supplied with energy via at least one rotary connection (14).

8. A roller according to any one of claims 1 to 6, characterised in that the heating device is disposed to be non-rotatable and is mounted rotatably in the cavity (5).

## Revendications

1. Cylindre chauffant (110) composé d'un corps cylindrique (10) tournant autour de son axe (2) et dont la surface périphérique (1) constitue la surface de travail, ce corps contenant un dispositif de chauffage et comportant un premier système de volumes creux (Hi) ainsi qu'un second système de volumes creux (H2) sous la forme de plusieurs canaux longitudinaux (30) séparés, régulièrement répartis à la périphérie du corps (10), parallèles à l'axe, obturés à leurs extrémités et remplis en partie par un liquide qui se vaporise à la température atteinte par l'action du dispositif de chauffage,
caractérisé en ce que
dans le premier système de volumes creux (Hi) se trouve un chauffage électrique par rayonnement (20) disposé dans la longueur du cylindre selon la direction longitudinale de celui-ci et couvrant au moins la largeur de travail du cylindre (100).

2. Cylindre selon la revendication 1,
caractérisé en ce que
les canaux sont, aux extrémités du corps de cylindre (10), obturés axialement vers l'extérieur par des bouchons enfoncés (25).

3. Cylindre selon la revendication 1,
caractérisé en ce que
les canaux (30), au moins à une extrémité du corps de cylindre (10), sont obturés axialement vers l'extérieur par une bague de fermeture commune (40).

4. Cylindre selon la revendication 2 ou 3,
caractérisé en ce que
la(les) bague(s) de fermeture (40) ou les bouchons (25) sont soudés le long de leurs zones de joint.

5. Cylindre selon une des revendications 2 à 4,
caractérisé en ce que
sur chacune des extrémités est rapporté un tourillon de cylindre (3) qui recouvre les zones de joint (26, 28, 29 ; 43, 44).

6. Cylindre selon la revendication 5,
caractérisé en ce que
le tourillon de cylindre (3) comporte une portée d'extrémité (3') perpendiculaire à l'axe (2) et venant s'appliquer sur la face frontale (1') du corps de cylindre (10), ainsi qu'un prolongement cylindrique (35) qui vient s'engager dans l'extrémité du corps de cylindre (10).

7. Cylindre selon une des revendications 1 à 6,
caractérisé en ce que
le dispositif de chauffage (20) tourne avec le corps de cylindre (10) et peut être alimenté en énergie par au moins un raccord tournant (14).

8. Cylindre selon une des revendications 1 à 6,
caractérisé en ce que
le dispositif de chauffage est monté fixe, dans le volume creux (5), et tourne avec lui.
